# EUROPÄISCHE PATENTSCHRIFT

(11) **EP 3 932 716 B1**
(45) Veröffentlichungstag und Bekanntmachung des Hinweises auf die Patenterteilung: **09.07.2025**
(21) Anmeldenummer: 21176812.2
(22) Anmeldetag: 31.05.2021
(51) Int. Cl.: B60K 6/48, B60K 17/28, B60K 6/52, B60K 6/40, B60K 6/387

(54) **LANDWIRTSCHAFTLICHE ARBEITSMASCHINE**
AGRICULTURAL MACHINE
MACHINE DE TRAVAIL AGRICOLE

(30) Priorität: 01.07.2020 DE 102020117283
(43) Veröffentlichungstag der Anmeldung: 05.01.2022
(73) Patentinhaber: CLAAS Tractor S.A.S., 78141 Vélizy-Villacoublay Cedex (FR)
(72) Erfinder: Fedde, Thomas, 33129 Delbrück (DE); Heymann, Philipp, 59519 Möhnesee Wamel (DE)
(74) Vertreter: CLAAS Gruppe

(56) Entgegenhaltungen:
- EP-A1- 3 098 106
- WO-A1-2018/227310
- DE-A1- 102011 102 265
- DE-A1- 102016 005 804
- DE-A1- 102018 218 078

## Beschreibung

Die vorliegende Anmeldung betrifft eine landwirtschaftliche Arbeitsmaschine gemäß dem Oberbegriff von Anspruch 1.

Die landwirtschaftliche Arbeitsmaschine, die insbesondere von einem Traktor gebildet sein kann, umfasst eine Vorderachse und eine Hinterachse, die jeweils mit mindestens zwei Rädern ausgestattet sind. Die Räder können von üblichen Rundrädern gebildet sein, wobei dann typischerweise jede Achse mit zwei Rädern zusammenwirkt. Ebenso ist es denkbar, dass eine der Achsen oder beide Achsen mit Rädern eines Kettenantriebs zusammenwirken, wobei eine jeweilige Achse beispielsweise mit vier Rädern zusammenwirken kann, nämlich zwei Rädern pro Seite der Achse, wobei die zu einer Seite gehörigen, einander zugeordneten Räder mit einer Antriebskette zusammenwirken.

Ferner umfasst die Arbeitsmaschine eine Verbrennungskraftmaschine, mittels der eine Ausgangsleistung zum Betrieb der Arbeitsmaschine zur Verfügung gestellt werden kann. Die Verbrennungskraftmaschine kann insbesondere von einem Dieselmotor gebildet sein. Ferner umfasst die Arbeitsmaschine mindestens ein Hybridmodul, mittels dessen gleichermaßen eine Ausgangsleistung zum Betrieb der Arbeitsmaschine bereitgestellt werden kann. Die Verbrennungskraftmaschine und das Hybridmodul arbeiten gemeinsam, sodass - beispielsweise zum Antrieb der Hinterräder - ein Vortrieb der Arbeitsmaschine mittels kombinierter Ausgangsleistungen aus der Verbrennungskraftmaschine und dem Hybridmodul bewerkstelligt werden kann. Dasselbe gilt für andere Verbraucher der Arbeitsmaschine wie beispielsweise eine Zapfwelle, mittels der externe Arbeitsmaschinen angetrieben werden können. Ferner ist eine Leistungsaufnahme von der Verbrennungskraftmaschine und dem Hybridmodul für interne Verbraucher denkbar wie beispielsweise Generatoren, Pumpen, Kompressoren und dergleichen. Das Hybridmodul kann insbesondere von einem Elektromotor oder einem Hydromotor gebildet sein. Auch ist eine Ausgestaltung als Elektromaschine oder Hydromaschine denkbar, die neben einer Motorfunktion zusätzlich umgekehrt als Generator verwendbar sind.

Die Arbeitsmaschine umfasst weiterhin eine Getriebeeinrichtung, die sowohl mit der Verbrennungskraftmaschine als auch mit dem Hybridmodul in Wirkverbindung steht. Die Getriebeeinrichtung ist dazu hergerichtet, sowohl die Ausgangsleistung der Verbrennungskraftmaschine als auch die Ausgangsleistung des Hybridmoduls aufzunehmen und die Ausgangsleistungen miteinander zu kombinieren. Die kombinierte Ausgangsleistung ist sodann mittels der Getriebeeinrichtung an die Hinterachse übertragbar, sodass die an der Hinterachse angeordneten Hinterräder der Arbeitsmaschine antreibbar sind.

Die Verbrennungskraftmaschine der Arbeitsmaschine ist in einem vorderen Bereich derselben angeordnet, wobei vorzugsweise mindestens 50 % des Eigengewichts der Verbrennungskraftmaschine über die Vorderräder in den Untergrund abgeleitet werden. Vorteilhafterweise ist die Verbrennungskraftmaschine unterhalb einer im Vorderbereich angeordneten Motorhaube angeordnet, wobei die Verbrennungskraftmaschine typischerweise direkt oberhalb der Vorderachse positioniert ist. Mithin ist es üblich, dass das Eigengewicht der Verbrennungskraftmaschine zu mindestens 90 %, vorzugsweise 100 %, über die Vorderräder in den Untergrund abgeleitet wird.

Arbeitsmaschinen der vorstehend beschriebenen Art sind im Stand der Technik bereits bekannt. Hierzu wird beispielhaft auf die deutsche Offenlegungsschrift DE 10 2018 218 078 A1 hingewiesen. Diese beschreibt eine Arbeitsmaschine, die sowohl mit einer Verbrennungskraftmaschine als auch mit einem als Elektromotor ausgebildeten Hybridmodul ausgestattet ist. Die Verbrennungskraftmaschine und der Elektromotor können gemeinsam dazu verwendet werden, eine Antriebsachse sowie der Antriebsachse zugehörige Räder der Arbeitsmaschine anzutreiben und auf diese Weise für einen Vortrieb der Arbeitsmaschine zu sorgen. Hierzu verfügt die Arbeitsmaschine über eine Getriebeeinrichtung, mittels der die Ausgangsleistungen der Verbrennungskraftmaschine und des Elektromotors summiert und gemeinsam an die Antriebsachse abgegeben werden können.

Eine weitere Arbeitsmaschine mit einem Hybridmodul ist aus der EP 3 098 106 A1 bekannt. Aus der DE 10 2011 102 265 A1 ist weiterhin ein Hybridmodul für einen nicht gattungsgemäßen Personenkraftwagen bekannt.

Bei bekannten Arbeitsmaschinen der vorstehend beschriebenen Art hat es sich als nachteilig erwiesen, dass der Triebstrang, mittels dessen die jeweilige Antriebsleistung auf die Antriebsachse übertragen wird, für die Summe der Ausgangsleistungen der Verbrennungskraftmaschine und des jeweiligen Hybridmoduls ausgelegt sein muss. Dies ist mit einem zusätzlichen technischen Aufwand verbunden, wobei die Auslegung des Triebstrangs basierend auf einer Maximalleistung des Systems vorgenommen werden muss, die jedoch in der Praxis lediglich im Einzelfall tatsächlich abgerufen wird. Die Konstruktion des Triebstrangs ist im Stand der Technik mithin ineffizient.

Der vorliegenden Anmeldung liegt demzufolge die Aufgabe zugrunde, eine Arbeitsmaschine bereitzustellen, deren Triebstrang gegenüber dem Stand der Technik effizienter ausgebildet ist.

Die zugrunde liegende Aufgabe wird erfindungsgemäß mittels einer landwirtschaftlichen Arbeitsmaschine mit den Merkmalen des Anspruchs 1 gelöst. Vorteilhafte Ausgestaltungen ergeben sich aus den zugehörigen Unteransprüchen.

Die erfindungsgemäße Arbeitsmaschine ist dadurch gekennzeichnet, dass das Hybridmodul in einem Hinterbereich der Arbeitsmaschine angeordnet ist, wobei die Ausgangsleistungen der Verbrennungskraftmaschine und des Hybridmoduls der Getriebeeinrichtung separat über separate Triebstrangabschnitte zuführbar sind. Insbesondere können die Verbrennungskraftmaschine und das Hybridmodul jeweils mittels eigener Abtriebswellen bzw. separater Abtriebswellenabschnitte einer gemeinsamen Hauptabtriebswelle mit der Getriebeeinrichtung verbunden sein, wobei die Getriebeeinrichtung mindestens zwei Eingänge für entsprechend Abtriebswellen bzw. Abtriebswellenabschnitte aufweist.

Vorzugsweise ist das Hybridmodul nahe der Hinterachse der Arbeitsmaschine angeordnet.

Erfindungsgemäß ist ein Schwerpunkt des Hybridmoduls innerhalb eines gedachten, von als Rundrädern ausgebildeten Hinterrädern aufgespannten Zylinderraums angeordnet.

Vorzugsweise werden mindestens 50 % des Eigengewichts des Hybridmoduls über die Hinterräder in den Untergrund abgeleitet. Weiter vorzugsweise werden mindestens 90 %, vorzugsweise 100 %, des Eigengewichts des Hybridmoduls über die Hinterräder in den Untergrund abgeleitet.

Die erfindungsgemäße Arbeitsmaschine hat viele Vorteile. Insbesondere entzerrt sie die Bereitstellung einer maximalen Ausgangsleistung von Verbrennungskraftmaschine und Hybridmodul in räumlicher Hinsicht. Somit ist lediglich die Verbrennungskraftmaschine in dem vorderen Bereich der Arbeitsmaschine angeordnet, was unter dem Gesichtspunkt der Massenverteilung - insbesondere im Hinblick auf etwaige Arbeitsgeräte, die an einem hinteren Ende an die Arbeitsmaschine angehängt werden können - besonders von Vorteil ist. Somit weist die Verbrennungskraftmaschine typischerweise eine hohe Masse auf, die ein Gegengewicht zu etwaigen Anhängelasten bildet. Das Hybridmodul ist demgegenüber an der Hinterachse angeordnet und kann sich mithin in räumlicher Nähe zu der Hinterachse als solcher befinden, zu der ein wesentlicher Anteil der Ausgangsleistung sowohl der Verbrennungskraftmaschine als auch des Hybridmoduls leitbar sein sollen. Infolge der Anordnung des Hybridmoduls im Bereich der Hinterachse, vorteilhafter Weise unmittelbar an der Hinterachse oder in selbige integriert, kann der sich ausgehend von der vorderseitigen Verbrennungskraftmaschine bis zu der Hinterachse erstreckende Triebstrangabschnitt gegenüber dem Stand der Technik für eine geringere Ausgangsleistung dimensioniert sein, nämlich nur diejenige der Verbrennungskraftmaschine, da die Ausgangsleistung des Hybridmoduls nicht - wie im Stand der Technik - bereits im Vorderbereich auf den Triebstrang aufgeschlagen wird, sondern erst in dem Hinterbereich der Arbeitsmaschine. Eine Strecke, über die sodann mittels des Triebstrangs eine gesamte Ausgangsleistung, die aus der Summe der Ausgangsleistungen der Verbrennungskraftmaschine und des Hybridmoduls gebildet ist, an die Hinterachse leitbar sein muss, ist dementsprechend vergleichsweise kurz.

In einer vorteilhaften Ausgestaltung der erfindungsgemäßen Arbeitsmaschine ist die Getriebeeinrichtung räumlich zwischen der Verbrennungskraftmaschine und dem Hybridmodul angeordnet. Bei einer solchen Ausgestaltung werden folglich die Ausgangsleistung der Verbrennungskraftmaschine der Getriebeeinrichtung "von vorne" und die Ausgangsleistung des Hybridmoduls "von hinten" zugeleitet. Die Anordnung der Getriebeeinrichtung zwischen der Verbrennungskraftmaschine und dem Hybridmodul ist hinsichtlich des verfügbaren Bauraums an der Arbeitsmaschine besonders einfach möglich.

Wie vorstehend bereits angedeutet, ist eine solche Ausgestaltung der erfindungsgemäßen Arbeitsmaschine besonders vorteilhaft, bei der das Hybridmodul in der Hinterachse integriert ist. Hierbei werden vorzugsweise mindestens 90 %, vorzugsweise 100 %, des Eigengewichts des Hybridmoduls über die Hinterachse und mithin die Hinterräder der Arbeitsmaschine in den Untergrund abgeleitet. Die Integration des Hybridmoduls in die Hinterachse hat den besonderen Vorteil, dass die Strecke zwischen dem Hybridmodul und der Hinterachse minimal ist, wobei zudem eine Strecke zwischen dem Hybridmodul und an dem hinteren Ende der Arbeitsmaschine angeordneten weiteren Verbrauchern sehr kurz ist, sodass zumindest ein Teil der Ausgangsleistung des Hybridmoduls lediglich über eine kurze Strecke zu den jeweiligen Verbrauchern geführt werden muss.

Weiterhin kann eine solche Ausgestaltung der Arbeitsmaschine von Vorteil sein, bei der ein Schwungraddämpfer, der mit einer Abtriebswelle bzw. einem Abtriebswellenabschnitt der Verbrennungskraftmaschine zusammenwirkt, in Richtung des Kraftflusses betrachtet vor der Getriebeeinrichtung angeordnet ist, das heißt stromaufwärts der Getriebeeinrichtung. Wie vorstehend bereits dargelegt ist, werden die Ausgangsleistungen der Verbrennungskraftmaschine und des Hybridmoduls mittels getrennter Abtriebswellen bzw. separater Abtriebswellenabschnitte abgeführt, wobei insbesondere der Getriebeeinrichtung die Ausgangsleistungen separat zugeführt werden. Zur Dämpfung von Belastungsspitzen ist der Verbrennungskraftmaschine - wie im Stand der Technik üblich - ein Schwungraddämpfer zugeordnet, der mit der Abtriebswelle der Verbrennungskraftmaschine zusammenwirkt. Die Anordnung des Schwungraddämpfers vor der Getriebeeinrichtung hat den Vorteil, dass der Schwungraddämpfer lediglich für die Ausgangsleistung der Verbrennungskraftmaschine dimensioniert sein muss, nicht für eine gesamte Ausgangsleistung von Verbrennungskraftmaschine und Hybridmodul zusammen. Dies ist für die Dimensionierung des Schwungraddämpfers von besonderem Vorteil, wodurch die Arbeitsmaschine insgesamt effizienter konstruierbar ist.

Da die Ausgangsleistungen der Verbrennungskraftmaschine und des Hybridmoduls mittels der Getriebeeinrichtung kombinierbar sind, ist es erforderlich, dass ein stromabwärts der Getriebeeinrichtung ausgebildeter Triebstrangabschnitt, mittels dessen die kombinierte Ausgangsleistung von der Getriebeeinrichtung zu der Hinterachse geführt werden, für die Summe der Ausgangsleistungen von der Verbrennungskraftmaschine und des Hybridmoduls ausgelegt ist. Um den Effizienzvorteil bei der Konstruktion der Arbeitsmaschine möglichst auszuschöpfen, ist es entsprechend von Vorteil, wenn die Getriebeeinrichtung räumlich der Hinterachse zugeordnet ist, sodass ein räumlicher Abstand zwischen der Getriebeeinrichtung und der Hinterachse - und mithin eine Länge des vollbelasteten Triebstrangabschnitts, mittels dessen die kombinierten Ausgangsleistungen übertragen werden müssen, möglichst kurz ist. Vorteilhafterweise ist die Getriebeeinrichtung dabei derart der Hinterachse zugeordnet, dass das Eigengewicht der Getriebeeinrichtung zu mindestens 50 %, vorzugsweise zu mindestens 75 %, weiter vorzugsweise zu mindestens 85 %, über die Hinterräder der Arbeitsmaschine in den Untergrund abgeleitet wird.

Die erfindungsgemäße Arbeitsmaschine weiter ausgestaltend sind Abtriebswellen und/oder Abtriebswellenabschnitte der Verbrennungskraftmaschine und des Hybridmoduls koaxial oder im rechten Winkel zueinander angeordnet. Vorteilhafterweise können die Abtriebswellen in Drehmoment übertragender Weise miteinander verbunden werden, beispielsweise mittels einer Kupplung, und auf diese Weise eine gemeinsame Hauptabtriebswelle bilden. Diese Ausgestaltung hat den besonderen Vorteil, dass eine mittels der Verbrennungskraftmaschine bereitgestellte Ausgangsleistung an die rückwärtigen Verbraucher der Arbeitsmaschine weitergeleitet werden kann, wobei in besonders bevorzugter Weise die Hauptabtriebswelle bis in den Hinterbereich der Arbeitsmaschine durchläuft. in der bevorzugten Ausgestaltung wird die Abtriebswelle der Verbrennungskraftmaschine mit der Abtriebswelle des Hybridmoduls gekoppelt, wobei die genannten Verbraucher gleichermaßen an die Hauptabtriebswelle angeschlossen sind. Die Verbraucher sind mithin - je nach Einstellung - entweder mit der alleinigen Ausgangsleistung der Verbrennungskraftmaschine, der alleinigen Ausgangsleistung des Hybridmoduls oder einer kombinierten Ausgangsleistung von Verbrennungskraftmaschine und Hybridmodul betreibbar. Die Hauptabtriebswelle kann in dem Hinterbereich der Arbeitsmaschine mit mindestens einem Verbraucher, vorzugsweise einer Mehrzahl von Verbrauchern, zusammenwirken. Solche Verbraucher können beispielsweise ein Generator, insbesondere ein Hochvoltgenerator, eine Hydraulikpumpe und/oder eine Zapfwelle sein.

Vorteilhafterweise verfügt die Arbeitsmaschine über mindestens einen, in ihrem Hinterbereich angeordneten Generator, der insbesondere als Hochvoltgenerator ausgebildet sein kann. Ein solcher Generator ist besonders gut geeignet, eine in dem Hinterbereich befindliche Steckdose mit elektrischem Strom zu versorgen, wobei Leitungskosten und Leitungsverluste aufgrund der geringen Distanzen zwischen dem Generator und der Steckdose gering sind. Derselbe Vorteil gilt für die Versorgung von Hochvoltanbaugeräten, die an einer Rückseite der Arbeitsmaschine an selbige angeschlossen werden. Diese können mittels des in dem Hinterbereich angeordneten Generator besonders effizient mit elektrischem Strom versorgt werden.

Schließlich kann eine solche Ausgestaltung der erfindungsgemäßen Arbeitsmaschine besonders von Vorteil sein, bei der eine Antriebswelle der Verbrennungskraftmaschine in dem vorderen Bereich der Arbeitsmaschine mit mindestens einem Verbraucher zusammenwirkt. Auch hier ist es denkbar, dass die Abtriebswelle mit einer Mehrzahl von Verbrauchern zusammenwirkt. Hierbei kann es sich beispielsweise um eine frontseitige Zapfwelle handeln, mittels der externe Arbeitsgeräte an die Arbeitsmaschine angekoppelt und auf diese Weise mit einer Ausgangsleistung versorgt werden können. Ferner ist es denkbar, dass in dem vorderen Bereich der Arbeitsmaschine mindestens eine Pumpe und/oder mindestens ein Generator an die Abtriebswelle der Verbrennungskraftmaschine angeschlossen sind.

### Ausführungsbeispiele

Die Erfindung ist nachstehend anhand eines Ausführungsbeispiels, das in den Figuren dargestellt ist, näher erläutert. Es zeigt:
- Fig. 1:: Eine Seitenansicht einer erfindungsgemäßen Arbeitsmaschine und
- Fig. 2:: Eine schematische Darstellung eines Antriebsstrangs der erfindungsgemäßen Arbeitsmaschine gemäß Figur 1.

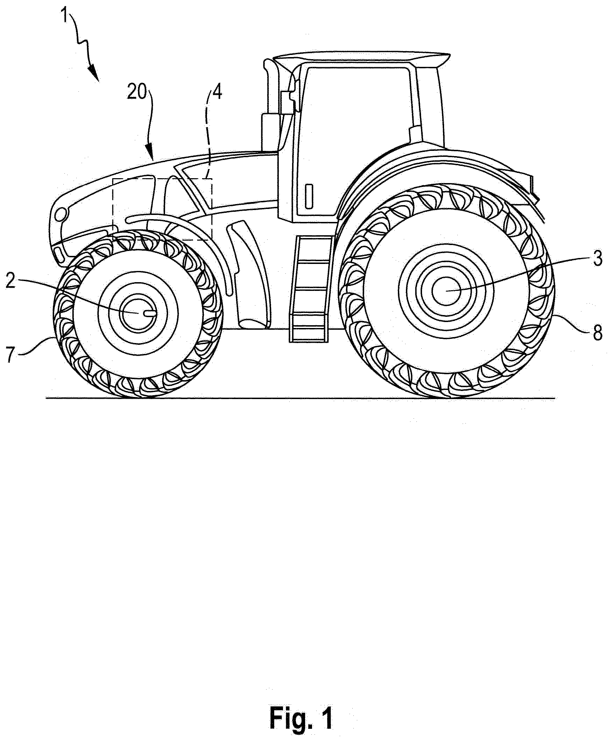

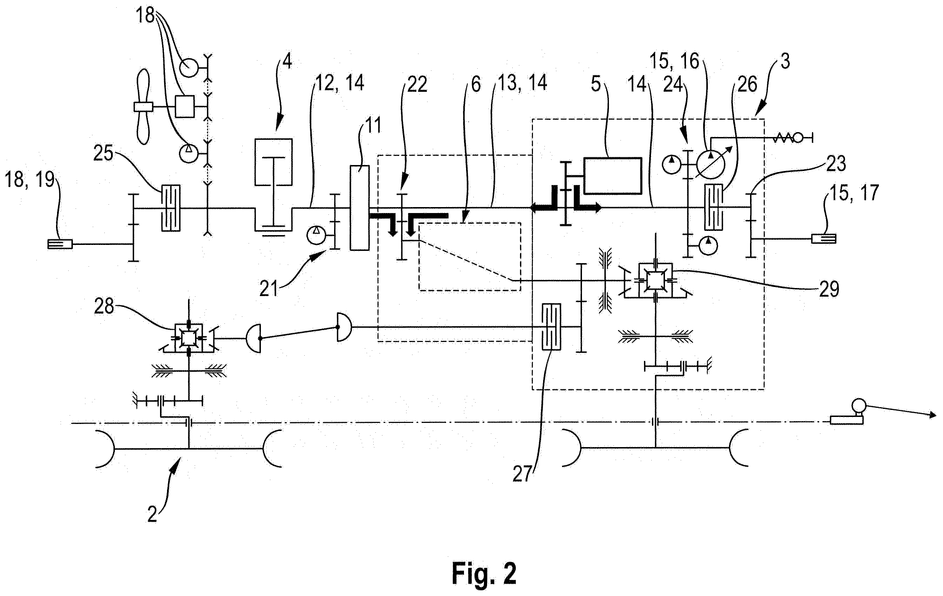

Ein Ausführungsbeispiel, das in den **Figuren 1** **und** **2** gezeigt ist, umfasst eine erfindungsgemäße Arbeitsmaschine **1,** die hier von einem Traktor gebildet ist. Die Arbeitsmaschine **1** umfasst eine Vorderachse **2** sowie eine Hinterachse **3,** wobei an der Vorderachse **2** zwei als Rundräder ausgebildete Vorderräder **7** sowie an einer Hinterachse **3** zwei als Rundräder ausgebildete Hinterräder **8** angeordnet sind. In einem vorderen Bereich **9** der Arbeitsmaschine **1** weist die Arbeitsmaschine **1** eine Motorhaube **20** auf, unterhalb der sich eine Verbrennungskraftmaschine **4** befindet, die in **Figur 1** mittels einer gestrichelten Linie veranschaulicht ist. Die Verbrennungskraftmaschine **4** ist hier von einem Dieselmotor gebildet. Die Verbrennungskraftmaschine **4** ist derart der Vorderachse **2** zugeordnet, dass das Eigengewicht der Verbrennungskraftmaschine **4** vollständig über die Vorderachse **2** sowie die Vorderräder **7** in einen Untergrund **30** abgeleitet wird.

Die Arbeitsmaschine **2** umfasst neben der Verbrennungskraftmaschine **4** ferner ein Hybridmodul **5,** das hier von einem Elektromotor gebildet ist. Das Hybridmodul **5** ist erfindungsgemäß der Hinterachse **3** zugeordnet, wobei sich der Schwerpunkt des Hybridmoduls **5** in einem gedachten, von den Hinterrädern **8** aufgespannten Zylinderraum befindet. In dem gezeigten Beispiel ist das Hybridmodul **5** in die Hinterachse **3** integriert, sodass hier 100 % des Eigengewichts des Hybridmoduls **5** über die Hinterräder **8** in den Untergrund **30** abgeleitet werden. Das Hybridmodul **5** ist mithin einem Hinterbereich **10** der Arbeitsmaschine **2** zugeordnet.

Die Verbrennungskraftmaschine **4** wirkt mit einer ihr zugeordneten Abtriebswelle **12** zusammen, mittels der eine Ausgangsleistung der Arbeitsmaschine **4** an nachgeschaltete Verbraucher leitbar ist. In dem gezeigten Beispiel erstreckt sich die Abtriebswelle **12** ausgehend von der Verbrennungskraftmaschine **4** sowohl in Richtung eines vorderen Endes der Arbeitsmaschine **2** als auch in Richtung eines hinteren Endes. Auf diese Weise können mittels der Verbrennungskraftmaschine **4** sowohl vorderseitige Verbraucher **18** als auch rückseitige Verbraucher **15** mit einer entsprechenden Leistung versorgt werden. An dem vorderen Ende weist die Arbeitsmaschine **1** beispielsweise eine Zapfwelle **19** auf, die mittels einer Kupplung **25** mit der Abtriebswelle **12** bedarfsweise koppelbar ist. Ferner befindet sich die Abtriebswelle **12** in Wirkverbindung mit weiteren Verbrauchern **18,** die hier beispielsweise von einem Kompressor, einem Ventilator und einem Generator gebildet sind. An der Abtriebswelle **12** der Verbrennungskraftmaschine **4** ist ferner eine Bremse **21** angeordnet, mittels der ein Bremsmoment auf die Abtriebswelle **12** aufbringbar ist. Ferner wirkt die Antriebswelle **12** mit einem Schwungraddämpfer **11** zusammen. Dieser ist in Richtung des Kraftflusses betrachtet diesseits einer Getriebeeinrichtung **6** angeordnet, die mit der Abtriebswelle **12** zusammenwirkt. Die Abtriebswelle **12** ist der Getriebeeinrichtung **6** von dem vorderen Bereich **9** der Arbeitsmaschine **1** aus zugeführt, wobei die Getriebeeinrichtung **6** einen entsprechenden Eingang aufweist.

Das Hybridmodul **5** wirkt seinerseits ebenfalls mit einer Abtriebswelle **13** zusammen, die sich sowohl in Richtung des Vorderbereichs **9** als auch eines hinteren Endes der Arbeitsmaschine **1** erstreckt. Die Getriebeeinrichtung **6** ist in dem gezeigten Beispiel unmittelbar an die Hinterachse **3** angeschlossen, wobei sich die Abtriebswelle **13** des Hybridmoduls **5** lediglich über eine kurze Strecke von dem Hybridmodul **5** zu der Getriebeeinrichtung **6** erstreckt. Die Abtriebswelle **12** der Verbrennungskraftmaschine **4** hingegen läuft von dem vorderen Bereich **9** aus bis zu der dem Hinterbereich **10** zugeordneten Getriebeeinrichtung **6** durch. Die Getriebeeinrichtung **6** ist dabei derart der Hinterachse **3** zugeordnet, dass ihr Eigengewicht zu mindestens 75 % über die Hinterachse **3** und mithin die Hinterräder **8** in den Untergrund **30** abgeleitet wird. Ausgehend von den Abtriebswellen **12, 13** werden Ausgangsleistungen der Verbrennungskraftmaschine **4** und des Hybridmoduls **5** mittels einer Abzweigung **22** abgezweigt und auf diese Weise der Getriebeeinrichtung **6** zugeführt. Diese wirkt im Bereich der Hinterachse **3** mit einem Differentialgetriebe **29** zusammen, mittels dessen die Ausgangsleistungen auf die beiden Hinterräder **8** aufgeteilt wird. Ferner ist der Getriebeeinrichtung **6** eine weitere Abzweigung **31** nachgeschaltet, mittels der ein Teil der Ausgangsleistung bedarfsweise über eine Kupplung **27** der Vorderachse **2** zuleitbar ist. Auch die Vorderachse **2** ist mit einem Differentialgetriebe **28** ausgestattet, sodass auch hier eine Kraftverteilung auf die beiden Vorderräder **7** vorgenommen werden kann.

Da die Verbrennungskraftmaschine **4** und das Hybridmodul **5** separat voneinander mittels zugeordnete Abtriebswellen **12, 13** ihre jeweiligen Ausgangsleistungen der Getriebeeinrichtung **6** zuleiten, müssen die Abtriebswellen **12, 13** nicht für eine Summe der Ausgangsleistungen der Verbrennungskraftmaschine **4** und des Hybridmoduls **5** ausgelegt sein. Dies betrifft insbesondere den Schwungraddämpfer **11,** der lediglich mit der Ausgangsleistung der Verbrennungskraftmaschine **4** beaufschlagt wird.

In dem Hinterbereich **10** der Arbeitsmaschine **1** sind weitere Verbraucher **15** angeordnet, die mittels der Verbrennungskraftmaschine **4** und des Hybridmoduls **5** versorgbar sind. Die Verbraucher sind hier von zwei Hydraulikpumpen **16** sowie einer Zapfwelle **17** gebildet. Zum Anschluss dieser Verbraucher **15** an die Verbrennungskraftmaschine **4** und des Hybridmoduls **5** erstreckt sich die Abtriebswelle **13** des Hybridmoduls **12** ausgehend von dem Hybridmodul **5** bis zu einem hinteren Ende der Arbeitsmaschine **1.** Dort wirkt die Abtriebswelle **13** mit einem Pumpenverteilergetriebe **24** zusammen, mittels dessen eine von der Abtriebswelle **13** abgenommenen Ausgangsleistung an die beiden Hydraulikpumpen **16** verteilt wird. Jenseits des Pumpenverteilergetriebes **24** ist ferner eine Kupplung **26** angeordnet, mittels der die Abtriebswelle **13** mittelbar mit der Zapfwelle **17** koppelbar ist. Hierbei ist in dem gezeigten Beispiel eine Untersetzung **23** zwischengeschaltet.

In besonders vorteilhafter Weise sind die Abtriebswellen **12, 13** der Verbrennungskraftmaschine **4** und des Hybridmoduls **5** koaxial oder im rechten Winkel zueinander angeordnet und miteinander verbunden. Auf diese Weise bilden die Abtriebswellen **12, 13** Abtriebswellenabschnitte einer Hauptabtriebswelle **14,** mittels der die Ausgangsleistungen der Arbeitsmaschine **4** und des Hybridmoduls **5** miteinander kombiniert werden können. Auf diese Weise ist die Möglichkeit gegeben, eine Ausgangsleistung der Verbrennungskraftmaschine **4** ausgehend von dem vorderen Bereich **9** der Arbeitsmaschine **1** bis in den hinteren Bereich **10** und den dortigen Verbrauchern **15** der Arbeitsmaschine **1** zu leiten, sodass die Verbraucher **15** zumindest zum Teil auch mittels der Ausgangsleistung der Verbrennungskraftmaschine **4** betreibbar sind. Hierbei ist es grundsätzlich vorstellbar, dass die von dem vorderen Bereich **9** bis in den hinteren Bereich **10** durchgeführte Hauptabtriebswelle **14** zumindest zeitweise ausschließlich die Ausgangsleistung der Verbrennungskraftmaschine **4** überträgt und die Verbraucher **15** entsprechend ausschließlich von der Verbrennungskraftmaschine **4** angetrieben werden. Gleichermaßen ist es denkbar, dass die Verbraucher **15** zumindest zeitweise ausschließlich mittels des Hybridmoduls das **5** angetrieben werden.

### Bezugszeichenliste

- 1: Arbeitsmaschine
- 2: Vorderachse
- 3: Hinterachse
- 4: Verbrennungskraftmaschine
- 5: Hybridmodul
- 6: Getriebeeinrichtung
- 7: Vorderrad
- 8: Hinterrad
- 9: Vorderbereich
- 10: Hinterbereich
- 11: Schwungraddämpfer
- 12: Abtriebswelle
- 13: Abtriebswelle
- 14: Hauptabtriebswelle
- 15: Verbraucher
- 16: Hydraulikpumpe
- 17: Zapfwelle
- 18: Verbraucher
- 19: Zapfwelle
- 20: Motorhaube
- 21: Bremse
- 22: Abzweigung
- 23: Untersetzung
- 24: Pumpenverteilergetriebe
- 25: Kupplung
- 26: Kupplung
- 27: Kupplung
- 28: Differentialgetriebe
- 29: Differentialgetriebe
- 30: Untergrund
- 31: Abzweigung

## Patentansprüche

1. Landwirtschaftliche Arbeitsmaschine (1), insbesondere in Form eines Traktors, umfassend
- eine Vorderachse (2) und eine Hinterachse (3),
- eine Verbrennungskraftmaschine (4),
- mindestens ein Hybridmodul (5) sowie
- eine Getriebeeinrichtung (6),
wobei die Verbrennungskraftmaschine (4) und das Hybridmodul (5) jeweils mit der Getriebeeinrichtung (6) in Wirkverbindung stehen,
wobei mittels der Getriebeeinrichtung (6) sowohl eine Ausgangsleistung der Verbrennungskraftmaschine (4) als auch eine Ausgangsleistung des Hybridmoduls (5) aufnehmbar und die Ausgangsleistungen kombiniert an die Hinterachse (3) übertragbar ist, sodass an der Hinterachse (3) angeordnete Hinterräder (8) der Arbeitsmaschine (1) antreibbar sind,
wobei die Verbrennungskraftmaschine (4) in einem Vorderbereich (9) der Arbeitsmaschine (1) angeordnet ist,
**dadurch gekennzeichnet, dass**
das Hybridmodul (5) in einem Hinterbereich (10) der Arbeitsmaschine (1) angeordnet ist,
wobei die Ausgangsleistungen der Verbrennungskraftmaschine (4) und des Hybridmoduls (5) der Getriebeeinrichtung (6) separat zuführbar sind,
wobei das Hybridmodul (5) räumlich zwischen den Hinterrädern (8) angeordnet ist, wobei sich ein Schwerpunkt des Hybridmoduls (5) in einem gedachten, durch als Rundräder ausgebildete Hinterräder (8) aufgespannten Zylinderraum befindet.

2. Arbeitsmaschine (1) nach Anspruch 1, **dadurch gekennzeichnet, dass** das Hybridmodul (5) nahe der Hinterachse (3) angeordnet ist.

3. Arbeitsmaschine (1) nach einem der vorhergehenden Ansprüche, **dadurch gekennzeichnet, dass** das Hybridmodul (5) in die Hinterachse (3) integriert ist.

4. Arbeitsmaschine (1) nach einem der vorhergehenden Ansprüche, **dadurch gekennzeichnet, dass** die Getriebeeinrichtung (6) räumlich zwischen der Verbrennungskraftmaschine (4) und dem Hybridmodul (5) angeordnet ist.

5. Arbeitsmaschine (1) nach einem der vorhergehenden Ansprüche, **dadurch gekennzeichnet, dass** das Hybridmodul (5) einen Elektromotor und/oder eine Hydromotor und/oder eine Elektromaschine und/oder eine Hydromaschine umfasst.

6. Arbeitsmaschine (1) nach einem der vorhergehenden Ansprüche, **dadurch gekennzeichnet, dass** ein Schwungraddämpfer (11), der mit einer Abtriebswelle (12) der Verbrennungskraftmaschine (4) zusammenwirkt, - von der Verbrennungskraftmaschine (4) aus betrachtet - vor der Getriebeeinrichtung (6) angeordnet ist.

7. Arbeitsmaschine (1) nach einem der vorhergehenden Ansprüche, **dadurch gekennzeichnet, dass** die Getriebeeinrichtung (6) räumlich der Hinterachse (3) zugeordnet ist, vorzugsweise räumlich zwischen den Hinterrädern (8) angeordnet ist.

8. Arbeitsmaschine (1) nach einem der vorhergehenden Ansprüche, **dadurch gekennzeichnet, dass** Abtriebswellen (12, 13) der Verbrennungskraftmaschine (4) und des Hybridmoduls (5) koaxial oder im rechten Winkel zueinander angeordnet sind, wobei vorzugsweise die Abtriebswellen (12, 13) in Drehmoment übertragender Weise miteinander verbunden sind und gemeinsam eine Hauptabtriebswelle (14) bilden.

9. Arbeitsmaschine nach Anspruch 8, **dadurch gekennzeichnet, dass** die Hauptabtriebswelle (14) von der Verbrennungskraftmaschine (4) bis in den Hinterbereich (10) der Arbeitsmaschine (1) durchläuft.

10. Arbeitsmaschine nach Anspruch 9, **dadurch gekennzeichnet, dass** die Hauptabtriebswelle (14) im Hinterbereich (10) mit mindestens einem Verbraucher (15), vorzugsweise einer Mehrzahl von Verbrauchern (15), zusammenwirkt, insbesondere mindestens einer Hydraulikpumpe (16) und/oder mindestens einer Zapfwelle (17).

11. Arbeitsmaschine nach Anspruch 10, **dadurch gekennzeichnet, dass** das Hybridmodul (5) - von der Verbrennungskraftmaschine (4) aus betrachtet - diesseits des mindestens einen Verbrauchers (15) an die Hauptabtriebswelle (14) angeschlossen ist, sodass der Verbraucher (15) im Bedarfsfall mit einer kombinierten Leistung der Verbrennungskraftmaschine (4) und des Hybridmoduls (5) versorgbar ist.

12. Arbeitsmaschine (1) nach einem der vorhergehenden Ansprüche, **dadurch gekennzeichnet, dass** eine Abtriebswelle (12) der Verbrennungskraftmaschine (4) in dem Vorderbereich (9) der Arbeitsmaschine (1) mit mindestens einem Verbraucher (18), vorzugsweise einer Mehrzahl von Verbrauchern (18), zusammenwirkt, insbesondere mit mindestens einer Zapfwelle (19).

13. Arbeitsmaschine (1) nach einem der vorhergehenden Ansprüche, **gekennzeichnet durch** mindestens einen Stromgenerator, vorzugsweise einen Hochvoltgenerator, der im Hinterbereich (10) der Arbeitsmaschine (1) angeordnet ist, vorzugsweise nah der Hinterachse (3), weiter vorzugsweise räumlich zwischen den Hinterrädern (8).

## Claims

1. An agricultural working machine (1), in particular in the form of a tractor, comprising:
- a front axle (2) and a rear axle (3);
- an internal combustion engine (4);
- at least one hybrid module (5), as well as
- a transmission device (6),
wherein the internal combustion engine (4) and the hybrid module (5) are respectively in operational connection with the transmission device (6),
wherein both a power output from the internal combustion engine (4) as well as a power output from the hybrid module (5) can be taken up and the combined power outputs can be transmitted to the rear axle (3) by means of the transmission device (6) so that rear wheels (8) of the working machine (1) disposed on the rear axle (3) can be driven,
wherein the internal combustion engine (4) is disposed in a front region (9) of the agricultural working machine (1),
**characterized in that**
the hybrid module (5) is disposed in a rear region (10) of the working machine (1),
wherein the power outputs from the internal combustion engine (4) and from the hybrid module (5) can be supplied separately to the transmission device (6),
wherein the hybrid module (5) is spatially disposed between the rear wheels (8), wherein a centre of gravity of the hybrid module (5) is located in an imaginary cylindrical space spanning the rear wheels (8) which are constructed as round wheels.

2. The working machine (1) according to claim 1, **characterized in that** the hybrid module (5) is positioned close to the rear axle (3).

3. The working machine (1) according to one of the preceding claims, **characterized in that** the hybrid module (5) is integrated into the rear axle (3).

4. The working machine (1) according to one of the preceding claims, **characterized in that** the transmission device (6) is spatially disposed between the internal combustion engine (4) and the hybrid module (5).

5. The working machine (1) according to one of the preceding claims, **characterized in that** the hybrid module (5) comprises an electric motor and/or a hydrostatic motor and/or an electric machine and/or a hydrostatic machine.

6. The working machine (1) according to one of the preceding claims, **characterized in that** a flywheel damper (11), which cooperates with a take-off shaft (12) of the internal combustion engine (4), is disposed - viewed from the internal combustion engine (4) - in front of the transmission device (6).

7. The working machine (1) according to one of the preceding claims, **characterized in that** the transmission device (6) is spatially associated with the rear axle (3), preferably spatially disposed between the rear wheels (8).

8. The working machine (1) according to one of the preceding claims, **characterized in that** take-off shafts (12, 13) of the internal combustion engine (4) and of the hybrid module (5) are disposed coaxially or at a right angle to each other, wherein preferably, the take-off shafts (12, 13) are connected to each other in a manner such as to transmit torque and together form a main take-off shaft (14).

9. The working machine (1) according to claim 8, **characterized in that** the main take-off shaft (14) passes from the internal combustion engine (4) through into the rear region (10) of the working machine (1).

10. The working machine (1) according to claim 9, **characterized in that** in the rear region (10), the main take-off shaft (14) cooperates with at least one consumer (15), preferably with a plurality of consumers (15), in particular at least one hydraulic pump (16) and/or at least one power take-off shaft (17).

11. The working machine (1) according to claim 10, **characterized in that** the hybrid module (5) - viewed from the internal combustion engine (4) - is connected to the main take-off shaft (14) on this side of at least one consumer (15) so that if necessary, the consumer (15) can be supplied with a combined output from the internal combustion engine (4) and from the hybrid module (5).

12. The working machine (1) according to one of the preceding claims, **characterized in that** a take-off shaft (12) of the internal combustion engine (4) cooperates with at least one consumer (18) in the front region (9) of the working machine (1), preferably with a plurality of consumers (18), in particular with at least one power take-off shaft (19).

13. The working machine (1) according to one of the preceding claims, **characterized by** at least one electrical generator, preferably a high voltage generator, which is disposed in the rear region (10) of the working machine (1), preferably close to the rear axle (3), more preferably spatially between the rear wheels (8).

## Revendications

1. Machine de travail agricole (1), notamment sous forme de tracteur, comprenant
- un essieu avant (2) et un essieu arrière (3),
- un moteur à combustion interne (4),
- au moins un module hybride (5) et
- un dispositif de transmission (6),
le moteur à combustion interne (4) et le module hybride (5) étant chacun en liaison fonctionnelle avec le dispositif de transmission (6),
le dispositif de transmission (6) permettant de recevoir aussi bien une puissance de sortie du moteur à combustion interne (4) qu'une puissance de sortie du module hybride (5) et de transmettre les puissances de sortie de façon combinée à l'essieu arrière (3), de sorte que des roues arrière (8) de la machine de travail (1) qui sont disposées sur l'essieu arrière (3) peuvent être entraînées,
le moteur à combustion interne (4) étant disposé dans une zone avant (9) de la machine de travail (1),
**caractérisée en ce que**
le module hybride (5) est disposé dans une zone arrière (10) de la machine de travail (1),
les puissances de sortie du moteur à combustion interne (4) et du module hybride (5) pouvant être amenées séparément au dispositif de transmission (6),
le module hybride (5) étant disposé dans l'espace entre les roues arrière (8), un centre de gravité du module hybride (5) se trouvant dans un espace de cylindre virtuel défini par des roues arrière (8) réalisées sous forme de roues circulaires.

2. Machine de travail (1) selon la revendication 1, **caractérisée en ce que** le module hybride (5) est disposé à proximité de l'essieu arrière (3).

3. Machine de travail (1) selon une des revendications précédentes, **caractérisée en ce que** le module hybride (5) est intégré dans l'essieu arrière (3).

4. Machine de travail (1) selon une des revendications précédentes, **caractérisée en ce que** le dispositif de transmission (6) est placé dans l'espace entre le moteur à combustion interne (4) et le module hybride (5).

5. Machine de travail (1) selon une des revendications précédentes, **caractérisée en ce que** le module hybride (5) comprend un moteur électrique et/ou un moteur hydraulique et/ou une machine électrique et/ou une machine hydraulique.

6. Machine de travail (1) selon une des revendications précédentes, **caractérisée en ce qu'**un amortisseur à volant d'inertie (11), qui coopère avec un arbre mené (12) du moteur à combustion interne (4), est placé en amont du dispositif de transmission (6) - vu depuis le moteur à combustion interne (4).

7. Machine de travail (1) selon une des revendications précédentes, **caractérisée en ce que** le dispositif de transmission (6) est associé dans l'espace à l'essieu arrière (3), de préférence dans l'espace entre les roues arrière (8).

8. Machine de travail (1) selon une des revendications précédentes, **caractérisée en ce que** des arbres menés (12, 13) du moteur à combustion interne (4) et du module hybride (5) sont disposés de façon coaxiale ou à angle droit l'un par rapport à l'autre, les arbres menés (12, 13) étant de préférence reliés entre eux de façon à transmettre un couple, et forment ensemble un arbre mené principal (14).

9. Machine de travail selon la revendication 8, **caractérisée en ce que** l'arbre mené principal (14) est continu depuis le moteur à combustion interne (4) jusque dans la zone arrière (10) de la machine de travail (1).

10. Machine de travail selon la revendication 9, **caractérisée en ce que** dans la zone arrière (10), l'arbre mené principal (14) coopère avec au moins un consommateur (15), de préférence une pluralité de consommateurs (15), notamment au moins une pompe hydraulique (16) et/ou au moins une prise de force (17).

11. Machine de travail selon la revendication 10, **caractérisée en ce que**, vu depuis le moteur à combustion interne (4), le module hybride (5) est raccordé à l'arbre mené principal (14) de ce côté-ci du consommateur (15), au nombre d'au moins un, de sorte qu'en cas de besoin, le consommateur (15) peut être alimenté avec une puissance combinée du moteur à combustion interne (4) et du module hybride (5).

12. Machine de travail (1) selon une des revendications précédentes, **caractérisée en ce que** dans la zone avant (9) de la machine de travail (1), un arbre mené (12) du moteur à combustion interne (4) coopère avec au moins un consommateur (18), de préférence une pluralité de consommateurs (18), notamment avec au moins une prise de force (19).

13. Machine de travail (1) selon une des revendications précédentes, **caractérisée en ce qu'**elle comprend au moins un générateur de courant, de préférence un générateur haute tension qui est disposé dans la zone arrière (10) de la machine de travail (1), de préférence à proximité de l'essieu arrière (3), et manière particulièrement préférable dans l'espace entre les roues arrière (8).
